# EUROPEAN PATENT APPLICATION

(11) **EP 0 549 563 A1**
(43) Date of publication of application: **30.06.1993**
(21) Application number: 93101240.5
(22) Date of filing: 26.07.1988
(51) Int. Cl.: B65G 53/30, B65B 25/06

(54) **Feed system for aligning butchered fish**

(30) Priority: 05.08.1987 US 81972
(62) Divisional of application: 88306877.7
(71) Applicant: PROMATION INCORPORATED, Seattle Washington 98107 (US)
(72) Inventor: Berg, Marvin I., Tacoma, Washington 98406 (US); Mihail, Stavros, Seattle, Washington 98199 (US); Oman, John E., South Edmonds, Washington 98020 (US)
(74) Representative: Arthur, Bryan Edward

(57) **Abstract**

A feed system (12) for receiving butchered fish (26) in water, comprising a hopper (24) having a tapered tubular base portion (28) which is connected via an elbow portion (30) to an inclined tube (29) which feeds a dewatering sub-station (37). The dewater sub-station has a plurality of circumferentially spaced ports which enable the water to be extracted and the dewatered fish are fed to a compression section (59) which is in the form of a frusto-conical tube. The apparatus thereby provides a source of substantially aligned fish of substantially uniform density.

## Description

The present invention relates to a feed system for receiving butchered fish in water and aligning the fish. Such a feed system can be used in the container-filling system disclosed in our co-pending application EP-88306877.7, published as EP-A-302,652, to which attention is directed.

In the fish processing industry, portions of butchered fish having their head, fins and entrails removed are often commercially distributed in hermetically sealed cans. The result is a conveniently sized product having a relatively long storage life. However, in certain applications the dispensed material may vary considerably in attractiveness from one container to the next. For example, when butchered fish are canned with conventional equipment, large unattractive pieces of skin may be left exposed on the upper surface of some cans when opened. In addition, the orientation of the meat, or the direction of its grain, may vary considerably throughout the can, failing to present the image of a substantially uniform, single piece of meat.

Additionally, the incidental presence of skin or bones around the flange of the can may prevent the can from being properly sealed. As will be appreciated, the resultant seam defect prevents a vacuum from being maintained within the can and will eventually contribute to the spoilage of the contents. Because of the health hazard presented by such spoilage, the production of even a small percentage of containers with seam defects is to be avoided.

Accordingly, the present invention provides a feed system for receiving butchered fish in water and producing a source of substantially aligned fish of substantially uniform density, said feed system comprising:
alignment means for substantially aligning the butchered fish in water;
dewatering means for separating the water from the butchered fish aligned by the alignment means; and
compression means for compressing the butchered fish after the water has been removed to provide a source of substantially aligned fish of substantially uniform density.

Preferred embodiments of the invention are defined in the dependent claims.

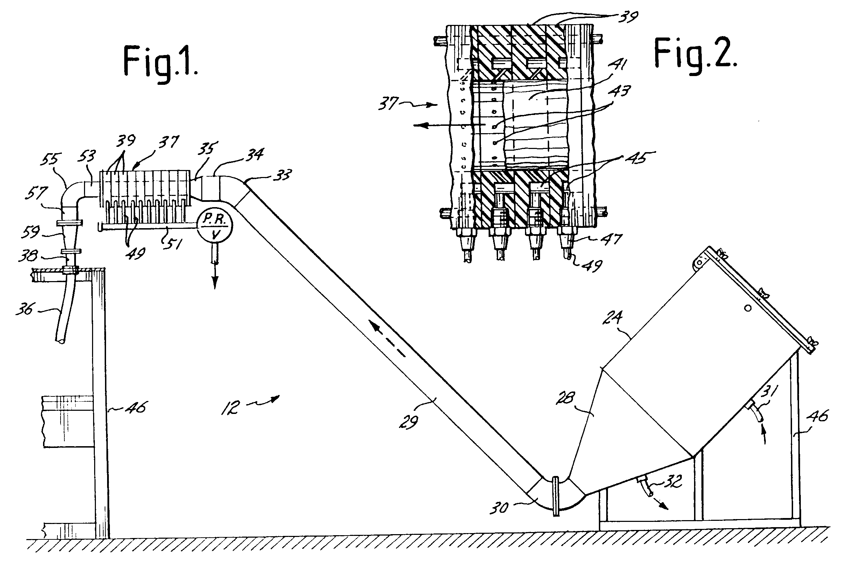

An embodiment of the invention is described below by way of example only, with reference to Figures 1 and 2 of the accompanying drawings, of which:
Figure 1 is a pictorial view of a feed system in accordance with the invention, and
Figure 2 is a longitudinal section taken on a portion of Figure 1 and illustrating a de-watering station in the system.

As shown in Figure 1, feed subsystem 12 includes a tilted hopper 24 designed to receive and temporarily store a supply of butchered fish 26, in water, that is sufficient to allow system 10 to continue operation for short periods, even without the receipt of additional fish 26 by hopper 24. As will be appreciated, the inclusion of water allows the fish 26 to be pumped under pressure directly from a butchering station into hopper 24.

Hopper 24 has a base 28 that is preferably shaped like the frustum of a cone. The resultant taper of the base 28, which is connected to a tubular transfer section 29 by an elbow 30, allows gravity to assist the introduction of butchered fish 26 into the elbow 30 and transfer section 29. The transfer of fish 26 into, and through, section 29 may be further assisted by the establishment of a pressure in the hopper 24 that is greater than that of the surrounding atmosphere and the maintenance of an adequate flow of water, both of which may be accomplished with the aid of inlet and outlet ports 31 and 32. The tapered base 28, elbow 30, and transfer section 29 are dimensioned to cooperatively orient the butchered fish 26 substantially longitudinally in transfer section 29. More particularly, fish 26 will be oriented such that their backbones are disposed substantially along the axis of section 29 as they travel through section 29.

Attached to the upper end of the transfer section 29 is an elbow 33 that extends into a horizontal section 34. Section 34 is followed by a compression section 35 that is shaped like the frustum of a cone. As will be appreciated, the variation in the diameter of section 35 effects a compression of the fish travelling therethrough. A dewatering station 37 follows section 35 to remove the water that has previously been used to transport butchered fish 26 in alignment through subsystem 12. As shown, station 37 includes a plurality of sections 39 that each have a cylindrical bore 41 extending therethrough. The various sections 39 are coupled end-to-end to define a continued passage for the butchered fish 26 received from section 35.

As shown in FIGURE 2, the bore 41 of each section 39 of the dewatering station 37 is provided with a plurality of circumferentially spaced-apart ports 43 that allow water to escape. A channel 45 is provided in each section 39, extending circumferentially around bore 41 and in fluid communication with the ports 43. Each channel 45 is connected via a coupler 47 to an individual line 49 of a water outlet system 51. As will be appreciated, the number of sections 39 and ports 43 can be varied to provide the desired dewatering characteristics. Similarly, valves can be included in lines 49 to control the escape of water through the ports 43 of each section 39 in any manner desired.

While the flow of water aids the longitudinal transport of butchered fish 26 through subsystem 12 prior to reaching station 37, the diameter of the passage through station 37 is sufficiently small to maintain the butchered fish 26 received therein in substantial alignment. From station 37, the aligned fish 26 traverse a short horizontal section 53 of tube, followed by a 90° elbow 55, and a short vertical section 57 of tube. At this point, the butchered fish 26 move downward into a second compression section 59.

Compression section 59 is shaped like the frustum of a cone and is dimensioned to effect the desired compression of butchered fish 26. More particularly, section 59, in cooperation with the applied hopper pressure, is designed to compress the dewatered and aligned fish 26 sufficiently to produce a continuous, aligned pack of substantially uniform density for advance to the measuring subsystem 14.

As with the preceding elements of the material feed system 12, which are rigid and fixedly attached and sealed in sequence, the outlet of the tapered compression section 59 is securely connected to a flexible transfer tube 36. The diameter of transfer tube 36 corresponds to that of the lower end of section 59. As shown in FIGURE 1, the connection between section 59 and tube 36 is provided by a collar 38 that provides a relatively fluid-tight seal. While the upper end of tube 36 is fixed, the lower end of tube 36, can be connected to a rotating measuring subsystem as shown in our co-pending EP-A-302,652.

## Claims

1. A feed system (12) for receiving butchered fish (26), in water and producing a source of substantially aligned fish of substantially uniform density, said feed system comprising:
alignment means (24,29,30) for substantially aligning the butchered fish in water;
dewatering means (37) for separating the water from the butchered fish aligned by the alignment means; and
compression means (59) for compressing the butchered fish after the water has been removed to provide a source of substantially aligned fish of substantially uniform density.

2. A feed system according to claim 1 wherein said alignment means (24,29,30) comprises a hopper (24) having a tapered tubular base portion (28) which is connected by a tubular elbow (30) to a tube (29).

3. A feed system according to claim 1 or claim 2 wherein said dewatering means (37) comprises a cylindrical bore (41) defining a passage for the aligned fish (26) and a plurality of circumferentially spaced apart ports(43) for removing water from the aligned fish in the cylindrical bore.

4. A feed system according to claim 3 wherein the ports (43) are connected to a plurality of channels (45) for transporting water away from the ports.

5. A feed system according to any preceding claim, wherein said compression means comprises a frusto-conical tube (59).
